# EUROPÄISCHE PATENTANMELDUNG

(11) **EP 2 946 922 A1**
(43) Veröffentlichungstag der Anmeldung: **25.11.2015**
(21) Anmeldenummer: 15164444.0
(22) Anmeldetag: 21.04.2015
(51) Int. Cl.: B32B 15/08, B32B 15/14, B32B 15/18, B32B 19/02, B32B 27/04, B32B 27/40, B32B 37/06, B32B 37/10, C08G 18/79, C09J 5/06, C09J 175/04

(54) **HERSTELLUNG EINES AUF STAHL UND POLYURETHAN BASIERENDEN FASERVERBUNDBAUTEILS**

(30) Priorität: 06.05.2014 DE 102014208415
(71) Anmelder: Evonik Industries AG, 45128 Essen (DE)
(72) Erfinder: Stapperfenne, Uwe, 42489 Wülfrath (DE); Reemers, Sandra, 48151 Münster (DE); Hallack, Markus, 46514 Schermbeck (DE)

(57) **Zusammenfassung**

Der Erfindung liegt die Aufgabe zu Grunde, ein Verfahren anzugeben, nach welchem sich Faserverbundbauteile aus Stahl und Polyurethan in der industriellen Praxis wirtschaftlich herstellen lassen. Eine Grundidee des erfindungsgemäßen Verfahrens besteht darin, eine besondere, an den Produktionsprozess angepasste Polyurethanzusammensetzung zu verwenden, die sich in einer ersten Vernetzungsreaktion in ein thermoplastisches Polymer umsetzten lässt und später in einer zweiten Vernetzungsreaktion zu einem duroplastischen Material endvernetzt wird. Erfindungsgemäß wird erst nach einem gestaltgebenden Umformschritt die Endvernetzung zum duroplastischen Polymer vorgenommen, sodass die hohe Endfestigkeit des Bauteils erst dann entsteht, wenn das Bauteil bereits seine endgültige Gebrauchsform angenommen hat. Kennzeichnend für die Erfindung ist eine enge Abstimmung der eingesetzten Chemikalien mit den mechanischen Verarbeitungsschritten, um so Synergien bei der Kunststoff- und Stahlverarbeitung zu nutzen.

## Beschreibung

Die Erfindung befasst sich mit der Herstellung eines auf Stahl und Polyurethan basierenden Faserverbundbauteils.

Unter einem Faserverbundbauteil ist in diesem Zusammenhang ein Bauteil einer Maschine, eines Land-, Luft-, Raum-, oder Wasser-Fahrzeugs, eines Apparats, einer Anlage oder eines Geräts zu verstehen, welches aus unterschiedlichen, miteinander unlösbar verbundenen Werkstoffen aufgebaut ist, wobei mindestens ein Werkstoff als Fasern vorliegt und mindestens ein Werkstoff als Matrix die Fasern umgibt. Das Faserverbundbauteil liegt dabei im Wesentlichen in der Gestalt vor, die durch seinen bestimmungsgemäßen Gebrauch festgelegt ist. Dies bedeutet, dass das Faserverbundbauteil praktisch einbaufertig bzw. verwendungsfertig geformt ist und - abgesehen von kleineren Nachbearbeitungen - keine weiteren Wesentlichen Gestaltänderungen mehr vor dem Einbau bzw. vor der Verwendung erfahren muss.

Das vorliegende Faserverbundbauteil umfasst die Werkstoffe Stahl, Polyurethan sowie den Faserwerkstoff.

Unter Stahl ist eine Gruppe von Eisenwerkstoffen zu verstehen, deren Massengehalt an Eisen größer ist als der jedes anderen enthaltenden Elements. Der Gehalt an Kohlenstoff liegt dabei unter 2 Gew.-%.

Unter Polyurethan ist eine Gruppe von Polymeren zu verstehen, die durch Reaktion von Diisocyanaten mit Polyolen erhalten werden. Es wird häufig abgekürzt als PU oder PUR.

Gegenüber Bauteilen, die aus homogenen Werkstoffen hergestellt sind, weist die Herstellung von Faserverbundbauteilen eine Besonderheit auf: Ein homogener Werkstoff liegt nämlich in der Regel bereits vor Herstellung des Bauteils vor; währenddessen ein Faserverbundwerkstoff erst bei der Herstellung des eigentlichen Faserverbundbauteils entsteht. Somit ist die Herstellung eines Faserverbundbauteils stets unmittelbar mit der Herstellung des zugehörigen Faserverbundwerkstoffes verbunden.

Auch ist bei der "Konstruktion" des Faserverbundwerkstoffes stets die spätere Belastung des daraus bestehenden Faserverbundbauteils zu beachten, damit die Lasten wie vorgesehen über die Matrix in die Fasern eingeleitet und von ihnen übertragen werden.

Bei der Produktion von Faserverbundbauteilen sind daher materialwissenschaftliche Aspekte weitaus beachtlicher als bei der Herstellung von Bauteilen aus homogenen Werkstoffen.

Dies gilt umso mehr, wenn es gilt, ein Faserverbundbauteil aus eher artfremden Werkstoffen aufzubauen; etwa dann, wenn eine anorganische Kohlenstofffaser in eine organische Polymermatrix eingebettet und diese zusätzlich von metallischen Deckschichten umgeben werden soll.

Ein solches Faserverbundbauteil verspricht die Vorteile der jeweiligen Einzelwerkstoffe zu verbinden, sodass man insgesamt ein Bauteil mit höchster mechanischer Festigkeit, guter thermischer Isolierung, Schwingungsdämpfung und Korrosionsbeständigkeit bei geringstem Gewicht erhält.

Die Herstellung eines solchen Bauteils ist jedoch technisch äußerst anspruchsvoll, da das spezifische Fachwissen der organischen und anorganischen Chemie, der Metallverarbeitung und des konstruktiven Einsatzes des Bauteils vereinigt werden müssen.

Insbesondere ist zu beachten, dass die industrielle Produktion von Polymeren sich gerade in Hinblick auf die Betriebsorganisation deutlich von der Metallherstellung und -verarbeitung unterscheidet. Die Herstellung eines aus Stahl und Polyurethan basierenden Faserverbundbauteils kann deswegen in der industriellen Praxis nur dann gelingen, wenn ein Verfahren entwickelt wird, welches sich sowohl in den betrieblichen Ablauf einer Chemieproduktion als auch einer Metallverarbeitung eingliedern lässt.

Selbstverständlich finden sich im Stand der Technik bereits zahlreiche Beispiele metallorganischer Faserverbundbauteile:
So offenbart DE10158491A1 ein Metall-Polyurethan-Laminat, welches aufgebaut ist aus zwei Schichten elektrogalvanisch verzinkter Stahlbleche, zwischen denen eine Schicht Polyurethan angeordnet ist, die mit Füll- und Verstärkungsstoffen ausgerüstet sein kann. Das Polyurethan wird zwischen den beiden Blechen ausgehärtet, dass ein plattenförmiges Verbundbauteil mit hoher mechanischer Festigkeit entsteht. Nachteil dieses Herstellungsverfahrens ist, dass es stets zu einem ebenen Laminat führt, dessen Verwendbarkeit aufgrund seiner flachen Gestalt eingeschränkt ist. Zwar wird ein Schälversuch beschreiben, bei dem das Laminat um 90° umgebogen und wieder zurückgebogen wird. Allerdings muss dieser Umformvorgang mit erhöhtem Kraftaufwand einhergehen, da das Polyurethan zu diesem Zeitpunkt bereits duroplastisch ausgehärtet ist und deswegen das Verbundbauteil bereits seine volle Festigkeit erreicht hat. Darüber, ob das umgeformte Laminat maßhaltig ist und nicht in seine flache Ausgangsform zurückstrebt, wird in DE10158491A1 nichts berichtet. Nachteilig an diesem Verfahren ist übrigens auch die rasche Reaktion der Isocyanat/Polyol-Komponenten zu dem Polyurethan, weswegen die Herstellung dieses Verbundbauteils unter Zeitdruck erfolgen muss. Es handelt sich hier auch nicht um ein Faserverbundbauteil sondern um ein Sandwich aus Blech und Polymer.

Ein ähnlich aufgebautes Stahl/PU-Verbundbauteil ist aus DE19914420A1 bekannt. Die Schichtstärken des Metalls liegen jedoch bei stattlichen 2 bis 20 mm, sodass es sich hier um Grobbleche handelt, die sich nicht wie Feinbleche (Stärke < 3mm) aufwickeln lassen. Ein solches Laminat lässt sich deswegen nicht mit einer klassischen Blechpresse verarbeiten, wie sie beispielsweise im Automobilbau verwendet werden. Aus diesem Grunde ist sein vorgesehener Einsatzzweck vielmehr der Schiffs- oder Brückenbau.

Ebenso für den Schiffsbau bestimmt ist die aus WO98/21029A1 bekannte Verbundstruktur. Diese umfasst zwei äußere, zueinander beabstandet Stahlplatten, die einen mit einem elastomeren Polyurethan gefüllten Hohlraum ausbilden. Der Elastomer dämpft Schwingungen in der Metallstruktur. Es handelt sich hierbei aber nicht um ein Faserverbundbauteil. Auch wird der Elastomer erst nach Fertigstellung der Stahlstruktur in den Hohlraum eingebracht.

Aus WO2009/009207A2 ist ein Verfahren zur Herstellung eines Faserverbundbauteils auf Basis von Metall und thermoplastischem Polyurethan bekannt. Hierzu wird ein bereits Fasern enthaltender thermoplastischer Polyurethan-Rohstoff aufgeschmolzen und unter Hitzeeinwirkung zwischen den Blechen in Form gepresst. Vorteil dieses Verfahrens ist, dass das Faserverbundbauteil auch eine nicht flache Gestalt annehmen kann und wenige Arbeitsschritte erforderlich sind. Nachteil ist, dass die Fasern als Kurzfaser bereits in dem Polyurethan-Rohstoff vorliegen und deswegen eine gezielte Ausrichtung der Fasern in Richtung des späteren Kraftflusses nicht möglich ist. Vielmehr wird ein Faserverbundbauteil mit ungeordneter Faserausrichtung produziert.

Ein deutlich größeres Einsatzspektrum deckt das aus DE102012106206A1 bekannte Sandwichblech ab. Es umfasst zwei metallische Deckbleche, zwischen denen eine Kernschicht aus faserhaltigem Polyurethan angeordnet ist. Dieses Sandwichblech lässt sich gut plastisch umformen; sogar tiefziehen zu dreidimensionalen Karosserieteilen. Nachteil ist hier die wässrige Formulierung des reaktiven Polyurethangemisches, sodass beim Verarbeitungsprozess Wasserdampf aus dem Laminat entweichen muss. Gelingt hier nicht eine vollständige Abfuhr des Wassers, ist eine innere Korrosion der Stahlbleche zu befürchten. Darüber hinaus ist die angegebene Polyurethanzusammensetzung hochreaktiv, sodass die Formgebung in einem engen Zeitfenster erfolgen muss. Insgesamt erscheint es fraglich, ob sich nach dem in DE102012106206A1 beschriebenen Verfahren ein Stahl/PU-Verbundbauteil technisch und wirtschaftlich herstellen lässt.

Das Problem der engen Verarbeitungszeitfester hochreaktiver Polyurethangemische wurde in DE102009001806A1 gelöst durch lagerstabile, anvernetzte Prepregs, die thermoplastisch umformbar sind und nach der Formgebung duroplastisch endvernetzt werden. Der besondere Vorteil dieser Prepregs - das sind mit Matixmaterial belegte Fasergewebe oder -gelege - besteht in ihrer Lagerstabilität. Dies bedeutet, dass sie im anvernetzten, thermoplastischen Zustand hinreichend lange gelagert und transportiert werden können. Dies bedeutet, dass die Produktion der Prepregs in einer ersten Betriebsstätte erfolgen kann und die Formgebung der Prepregs zu dem Formkörper sowie dessen Endvernetzung zum Faserverbundbauteil an einem anderen, entfernten Ort erfolgen kann. Dies eröffnet neue Freiheitsgrade in der Organisation der Herstellung des Faserverbundbauteils und insbesondere auch eine kompetenzorientierte Arbeitsteilung über mehrere Betriebsstätten hinweg. Nachteil dieser lagerstabilen Prepregs ist jedoch, dass sie sich nur eingeschränkt zur Lamination mit Stahl eignen. Insbesondere erzielen sie nicht eine hinreichende Stahl/Polymer-Bindung, um eine zerstörungsfreie Umformung eines daraus hergestellten Laminats zu ermöglichen, wie Beispiel 0 später noch zeigen wird.

Nach alledem ist bislang kein Verfahren beschrieben worden, nach welchem sich Faserverbundbauteile aus Stahl und Polyurethan in der industriellen Praxis wirtschaftlich herstellen lassen.

Der Erfindung liegt die Aufgabe zu Grunde, ein solches Verfahren anzugeben.

Gelöst wird diese Aufgabe durch ein Verfahren mit den Schritten a) bis h):
a) Bereitstellen mindestens zweier Stahlbleche;
b) Bereitstellen mindestens eines textilen Flächengebildes;
c) Bereitstellen eines wasserfreien Gemisches enthaltend
   - mindestens einen Härter, bei welchem es sich um ein Uretdion handelt, dessen NCO-Funktionalität mindestens zwei beträgt,
   - mindestens einen Binder, der Hydroxylgruppen aufweist und dessen OH-Funktionalität drei bis sechs beträgt,
   - und mindestens ein Cobindemittel, welches Oxirangruppen aufweist;
d) Belegen des textilen Flächengebildes mit dem Gemisch;
e) Beaufschlagen des mit dem Gemisch belegten Flächengebildes mit Energie zwecks Durchführung einer ersten Vernetzungsreaktion, in Zuge derer Härter, Binder und Cobindemittel zu einem an dem textilen Flächengebilde anhaftenden, thermoplastischen Polymer umgesetzt werden;
f) Verpressen der Stahlbleche und des textilen Flächengebildes mit dem daran anhaftenden thermoplastischen Polymer unter Wärmeeinwirkung zu einem Sandwich, dergestalt, dass das thermoplastische Polymer unter Einschluss des textilen Flächengebildes die Stahlbleche aneinander fügt;
g) Umformen des Sandwichs zu einem Formkörper;
h) Wärmebehandeln des Formkörpers unter Erhalt des Faserverbundbauteils, wobei das thermoplastische Polymer in einer zweiten Vernetzungsreaktion zu einem duroplastischen Polymer umgesetzt wird.

Ein solches Verfahren zur Herstellung eines Faserverbundbauteils ist Gegenstand dieser Erfindung.

Eine Grundidee des erfindungsgemäßen Verfahrens besteht darin, eine besondere, an den Produktionsprozess angepasste Polyurethanzusammensetzung zu verwenden, die sich in einer ersten Vernetzungsreaktion in ein thermoplastisches Polymer umsetzten lässt und später in einer zweiten Vernetzungsreaktion zu einem duroplastischen Matrixmaterial endvernetzt wird. Das thermoplastische Polymer hat dabei den Vorteil, dass es sich unter Wärmeeinwirkung vergleichsweise leicht verformen lässt und dabei die Haftung an den Stahlblechen gut gewährleistet. Es ist demnach möglich, das flache Laminat unter Erhalt eines dreidimensionalen Formteils umzuformen, ohne dass sich das Blech von dem Polymer löst. Erfindungsgemäß wird erst nach dem gestaltgebenden Umformschritt die Endvernetzung zum duroplastischen Polymer vorgenommen, sodass die hohe Endfestigkeit des Bauteils erst dann entsteht, wenn das Bauteil bereits seine endgültige Gebrauchsform angenommen hat. Dies reduziert die Umformkräfte und die Gefahr einer Delamination beim Umformen enorm.

Kennzeichnend für die Erfindung ist also eine enge Abstimmung der eingesetzten Chemikalien mit den mechanischen Verarbeitungsschritten, um so Synergien bei der Kunststoff- und Stahlverarbeitung zu nutzen.

Der Schlüssel zum erfindungsgemäßen Erfolg ist die Wahl der richtigen Polyurethanzusammensetzung, die eine zweistufige Vernetzung erlaubt und zugleich eine hohe Haftung an dem Stahl erzielt. Ein geeignetes Gemisch ist in Anspruch 1 niedergelegt und wird in den Unteransprüchen weiter konkretisiert.

Das angegebene Gemisch hat auch den besonderen Vorteil, dass es zu einem lagerstabilen thermoplastischen Polyurethan führt, der nicht rasch weiterreagiert. Damit ist es möglich, das teilvernetzte Sandwich zu lagern oder zu transportieren, bevor es im nächsten Schritt umgeformt wird. Auf diese Weise ist eine Aufteilung des Herstellungsverfahrens auf unterschiedliche Betriebstätten möglich, weswegen das Verfahren sogar über Unternehmensgrenzen hinweg betrieben werden kann. Dies ist ein großer organisatorischer Vorteil.

Das angegebene Gemisch hat auch den verfahrenstechnischen Vorteil, dass es wasserfrei ist und deswegen während der Produktion kein störendes Wasser anfällt. Die Wasserfreiheit kommt auch dem späteren Faserverbundbauteil zu Gute, da dieses keine Wasserrückstände aufweisen kann, welche die Bleche von innen rosten ließen und zu Störungen der Haftung des Bauteils führen kann.

Anstelle von Wasser sieht die Erfindung vor, das reaktive Gemisch entweder in trockener Pulverform oder flüssig, nämlich gelöst mindestens einem organischen Lösemittel einzusetzen.

Sofern das Gemisch als trockenes Pulvergemisch eingesetzt wird, erfolgt das Belegen des textilen Flächengebildes mit dem Gemisch einfach durch Aufstreuen. Das Aufschmelzen und Anvernetzen erfolgt über Energieeintrag, etwa durch Wärmestrahlung oder IR-Strahlung. Die Pulverroute ist daher besonders umweltfreundlich, da keine Lösemittel entfernt werden müssen.

Falls das Gemisch flüssig, als Lösung in mindestens einem organischen Lösemittel eingesetzt wird, erfolgt das Belegen des textilen Flächengebildes durch Imprägnierung desselben mit der Lösung. Dies hat gegenüber dem Aufstreuen den Vorteil, dass das reaktive Gemisch so auch tief in das textile Flächengebilde eindringt, wodurch die Haftung des Gemisches an dem Textil während der Produktion und später des Faser/Matrix-Verbundes verbessert wird. Deswegen wird ein flüssiges Gemisch der Pulvervariante bevorzugt.

Als Lösemittel werden vorzugsweise Ester oder Ketone wie beispielsweise Methylisobutylketon oder Isopropylacetat eingesetzt, da diese die relevanten Härter Binder und Cobindemittel gut lösen. Es können auch mehrere Lösungsmittel gemischt werden.

Es soll nicht mehr Lösemittel verwendet werden als notwendig, um die Komponenten vollständig zu lösen und eine gute Imprägnierung des Textils zu erzielen. Die Praxis zeigt, dass etwa 35 - 50 Gewichts% Lösemittel bezogen auf das Gesamtgewicht des Gemisches ausreichen.

Die genannten Lösemittel lassen sich nach der Imprägnierung durch Verdampfung wieder leicht aus dem textilen Flächengebilde entfernen. Dafür sind aufgrund der hohen Flüchtigkeit dieser Lösemittel nur geringe Temperaturen im Vergleich zum Wasser erforderlich. Außerdem lassen sich mit diesen Lösemitteln nach der Trocknung vernachlässigbare Restlösemittelgehalte erzielen. Dies ist mit Wasser auf Grund seiner hohen Verdampfungsenthalpie bei vergleichbaren Temperaturen nicht erreichbar, daher kann es neben Korrosionserscheinungen auch potentiell zu partiellen Enthaftungen nach der thermischen Aushärtung durch Verdampfung von Restwasser zwischen den Blechen kommen.

Die geringe Verdampfungstemperatur dieser Lösemittel erschließt den verfahrenstechnischen Vorteil, dass das Verdampfen des Lösemittels, die Erzielung niedriger Restlösemittelgehalte und das Beaufschlagen des Gemisches mit Energie zwecks Durchführung der ersten Vernetzungsreaktion in einem Arbeitsschritt durch Wärmeeinwirkung bei einer Temperatur von 80°C bis 160°C erfolgen können. Das spart Zeit und Energie.

Dieser kombinierte Arbeitsschritt erfolgt bevorzugt bei einer Temperatur von 120°C bis 160°C, wobei der Temperaturbereich von 140°C bis 160°C besonders bevorzugt ist. Die Dauer der Wärmeeinwirkung beträgt vorzugsweise 10 Minuten bis 30 Minuten.

Die Wärmeeinwirkung beim Verpressen der Stahlbleche und des textilen Flächengebildes mit dem daran anhaftenden thermoplastischen Polymer zu dem Sandwich erfolgt hingegen bei einer Temperatur von 80°C bis 180°C, wobei der Temperaturbereich von 100°C bis 170°C bevorzugt und der von 120°C bis 160°C besonders bevorzugt ist. Die Wärmeeinwirkung erfolgt dabei über einen Zeitraum von 3 Minuten bis 20 Minuten.

Das Umformen des Sandwiches zu dem Formkörper erfolgt bei einer Temperatur von 20°C bis 160°C, bevorzugt bei einer Temperatur von 20°C bis 100°C.

Solange sich das Polyurethan noch im thermoplastischen Zustand befindet, sind die vorerörterten Verarbeitungstemperaturen noch vergleichsweise moderat. Für die Endvernetzung zum Duroplasten werden nunmehr höhere Temperaturen benötigt.

So erfolgt die Wärmebehandlung des Formkörpers zwecks Durchführung der zweiten Vernetzungsreaktion bei einer Temperatur von 170° bis 210°C, bevorzugt von 180° bis 200°C. Insbesondere sollte die zweite Vernetzung einer Temperatur erfolgen, die mindestens 20°C höher liegt als die Temperatur, bei der die erste Vernetzungsreaktion durchgeführt wird. Durch den Temperaturabstand wird verhindert, dass das Polyurethan bereits in der ersten Wärmebehandlung durchvernetzt. Die zweite Wärmebehandlung erfolgt über einen Zeitraum von insbesondere 20 Minuten bis 60 Minuten.

Eine besonders bevorzugte Ausführungsform der Erfindung sieht vor, dass Bleche aus einem Stahl eingesetzt werden, die nach der Umformung bei der Wärmebehandlung des Formkörpers eine Veränderung und/oder Umlagerung ihres Gefüges aufweisen. Hierbei erfahren fertig umgeformte Bauteile durch die Wärmebehandlung einen Anstieg der Festigkeit. Dahinter steht die Idee, bei der Endvernetzung des Polyurethans zum Duroplast gleichzeitig eine Wärmebehandlung des Stahls vorzunehmen, um seine Dauerfestigkeit und Energieaufnahme zu erhöhen. Verantwortlich dafür ist das Mikrogefüge dieser Stähle, das aus einer dehnbaren ferritischen Matrix mit darin eingelagerten harten martensitischen oder bainitischen Phasen besteht. Es wird also gleichzeitig eine an sich bekannte metallurgische Eigenschaft ausgenutzt und die endgültige Polymerisation der Matrix durchgeführt.

Der Effekt ist ausführlich beschrieben in "Structure and mechanical properties of dual phase steels", Ylva Granbom, Doctoral thesis 2010, Royal Institute of Technology School of Industrial Engineering and Management SE-100 44 Stockholm, Sweden, sowie in Firmeninformation ThyssenKrupp Steel Europe "Dualphasen Stähle DP-W und DP-K, Stand Februar 2013. Hierdurch können in einem Prozessschritt zwei Materialveränderungen durchgeführt werden, was Zeit und Energie spart.

Vorzugsweise werden bake-hardening-Stähle (BHZ) oder Dualphasen-Stähle (DP) eingesetzt, da deren Festigkeit ebenso wie die der zweistufig vernetzbare Polyurethanzusammensetzung in den beiden Wärmebehandlungsschritten gesteigert werden kann. BHZ oder DP Stähle werden von den großen Stahlerzeugern für den Karosseriebau kommerziell angeboten.

Die eingesetzten Stahlbleche können bereits mit einer Korrosionsschutzschicht versehen sein. In Betracht kommen galvanisch verzinkte Stahlbleche oder mit einem Lack auf Polyurethanbasis beschichtete Bleche. Auf beiden Substraten haftet die erfindungsgemäße Polyurethanzusammensetzung ebenso gut wie auf blankem Stahl.

Wie bereits geschildert, ist die eingesetzte Polyurethanchemie mit maßgeblich für den erfindungsgemäßen Erfolg. Die genaue Zusammensetzung des Gemisches, aus dem durch zweistufige Vernetzung zunächst ein thermoplastisches und später ein duroplastisches Polymer aus der Klasse der Polyurethane entsteht, soll nun näher erläutert werden.

Das Gemisch setzt sich aus drei Basiskomponenten zusammen, nämlich einen Härter, einen Binder und ein Cobindemittel. Die einzelnen Komponenten können ihrerseits Gemische aus mehreren Substanzen sein, sodass das Gemisch auch mehrere Härter, Binder oder Cobindemittel enthalten kann. Zusätzlich kann das Gemisch weitere Komponenten, etwa Verarbeitungshilfsmittel, Zusatzstoffe wie Entlüfter, Entschäumer, Fließhilfsmittel, Benetzungsmittel und Verlaufshilfsmittel enthalten. Weitere bekannte Additive und Zusatzmittel aber auch Pigmente, oder Flammschutzmittel können bei Bedarf verwendet werden.

Als Härter werden Uretdione verwendet, deren NCO-Funktionalität mindestens zwei beträgt. Unter Funktionalität der Uretdione versteht man die nach der Ringöffnung zur chemischen Reaktion befähigten freien Isocyanatgruppen. Eine Funktionalität von 2 ist notwendig für die Erzeugung eines möglichst engmaschigen Netzwerkes nach der Reaktion mit den eingesetzten Polyolen mit einer Funktionalität größer 3, ansonsten erhält man eine schwach vernetzte Matrix, die nicht die hier geforderten mechanischen Festigkeiten aufweist.

Uretione werden durch Polymerisierung von Isocyanaten erhalten. Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungs-katalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet.

Die erfindungsgemäß eingesetzten Di- und Polyisocyanate zur Herstellung der Uretdione können aus beliebigen aliphatischen, cycloaliphatischen und/oder cyclo)aliphatischen Di- und/oder Polyisocyanaten bestehen.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und-triisocyanate.

Ebenfalls geeignet sind 4-Methyl-cyclohexan-1,3-diisocyanat, 2-Butyl-2-ethylpentamethylendiisocyanat, 3(4)-Isocyanatomethyl-1-methylcyclohexylisocyanat, 2-Isocyanatopropylcyclohexylisocyanat, 2,4'-Methylenbis(cyclohexyl)diisocyanat, 1,4-Diisocyanato-4-methyl-pentan.

Bevorzugt sind aber Di- und Polyisocyanate aus beliebigen aliphatischen, cycloaliphatischen und/oder (cyclo)aliphatischen Di- und/oder Polyisocyanaten. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet. Ganz besonders bevorzugt werden IPDI, HDI, TMDI und/oder H₁₂MDI eingesetzt. Ganz besonders bevorzugt wird das Uretdion von IPDI und/oder HDI verwendet. Es können auch Mischungen von beliebigen Uretdionen als Härter eingesetzt werden.

Als Härter werden intern blockierte (Uretdione) Di-und Polyisocyanate bevorzugt eingesetzt. Die eingesetzten Uretione sind frei von externen Blockierungsmitteln, da eine interne Blockierung über eine Dimerbildung über Uretdion-Strukturen erfolgt, die bei erhöhter Temperatur wieder in die ursprünglich vorhandene Isocyanat-Strukturen zurückspalten und damit die Vernetzung mit dem Bindemittel in Gang setzt. Für den hier vorgesehenen Verwendungszweck ist es unabdingbar, mit blockierungsmittelfreien Härtern zu arbeiten, die ohne Abspaltung von flüchtigen externen Blockierungsmitteln reagieren. Wenn blockierungsmittelhaltige Härter eingesetzt werden, spalten diese bei der thermischen Vernetzung das flüchtige Blockierungsmittel ab. Dadurch kommt es zu einer Volumenzunahme durch das Blockierungsmittel zwischen den Blechen des Sandwich mit dem Resultat der Delaminierung von Prepreg und Blech.

Als Hydroxylgruppenhaltige Binder eignen sich grundsätzlich alle in der PU-Chemie üblicherweise eingesetzten Polyole, solange deren OH-Funktionalität zwischen drei und sechs beträgt. Unter der Funktionalität einer Polyolverbindungen versteht man die Anzahl der zur Reaktion befähigten OH-Gruppen des Moleküls. Für den Verwendungszweck ist es notwendig, Polyolverbindungen einzusetzen, die eine OH-Funktionalität von 3 bis 6 aufweisen, um bei der Reaktion mit den Isocyanatgruppen der Uretdione ein dreidimensionales dichtes Polymernetzwerk aufzubauen.

Geeignete Polyole sind beispielsweise:

| | OH-Zahl (ca.) | Molmasse | Hersteller |
|---|---|---|---|
| Glycerin | 1800 | 92 | Perstorp |
| Polyol 3165 | 1010 | 165 | Perstorp |
| Polyol 3380 | 380 | 440 | Perstorp |
| Polyol 3610 | 610 | 280 | Perstorp |
| Polyol 3940 | 940 | 180 | Perstorp |
| Polyol 3990 | 990 | 170 | Perstorp |
| Polyol 4290 | 290 | 800 | Perstorp |
| Polyol 4360 | 360 | 630 | Perstorp |
| Polyol 4525 | 525 | 430 | Perstorp |
| Polyol 4640 | 640 | 360 | Perstorp |
| Polyol 4800 | 800 | 280 | Perstorp |
| Polyol R3215 | 215 | 1010 | Perstorp |
| Polyol R3430 | 430 | 400 | Perstorp |
| Polyol R3530 | 530 | 310 | Perstorp |
| Polyol R3540 | 540 | 310 | Perstorp |
| Polyol R3610 | 610 | 280 | Perstorp |
| Polyol R4631 | 630 | 280 | Perstorp |
| Polyol R6405 | 405 | 830 | Perstorp |
| Voranol CP 260 | 660 | 255 | Dow |
| Voranol CP 300 | 565 | 300 | Dow |
| Voranol CP 450 | 380 | 450 | Dow |
| Voranol CP 755 | 240 | 700 | Dow |
| Voranol CP 1055 | 155 | 1000 | Dow |
| Voranol RH 360 | 360 | 700 | Dow |
| Voranol RN 490 | 490 | 490 | Dow |
| Voranol RA 640 | 640 | 350 | Dow |
| Voranol RA 800 | 800 | 280 | Dow |
| Terathane 650 | 170 | 650 | DuPont |
| Terathane 1000 | 100 | 1000 | Du Pont |
| Capa 3031 | 560 | 300 | Perstorp |
| Capa 3041 | 395 | 425 | Perstorp |
| Capa 3050 | 310 | 540 | Perstorp |
| Capa 3091 | 180 | 900 | Perstorp |
| Capa 4101 | 220 | 1000 | Perstorp |

Selbstverständlich können auch Mischungen dieser Polyole eingesetzt werden.

Als Binder eignen sich auch Polyole, die weitere funktionelle Gruppen enthalten. Hierbei handelt es sich um die an sich bekannten linearen oder verzweigten hydroxylgruppenhaltigen Polyester, Polycarbonate, Polycaprolactone, Polyether, Polythioether, Polyesteramide, Polyurethane oder Polyacetale. Sie weisen vorzugsweise ein zahlenmittleres Molekulargewicht von 134 bis 3 500 auf. Bevorzugt sind lineare hydroxylgruppenhaltige Polyester - Polyesterpolyole - oder Gemische solcher Polyester. Sie werden z. B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt.

Zur Herstellung der Polyesterpolyole geeignete Diole sind:
Ethylenglykol, 1,2-, 1,3-Propandiol, Diethylen-, Dipropylen-, Triethylen-, Tetraethylenglykol, 1,2-, 1,4-Butandiol, 1,3-Butylethyl¬propandiol, 1,3-Methylpropandiol, 1,5-Pentandiol, Bis-(1,4-hydroxymethyl)cyclo¬hexan (Cyclohexandimethanol), Glycerin, Hexandiol, Neopentylglykol, Trimethylol¬ethan, Trimethylolpropan, Pentaerythrit, Bisphenol A, B, C, F, Norbornylenglykol, 1,4-Benzyldimethanol, -ethanol, 2,4-Dimethyl-2-ethylhexan-1,3-diol, 1,4- und 2,3-Butylenglykol, Di-ßhydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.02,6]decan (Dicidol), 2,2-Bis-(4-hydroxycyclohexyl)¬propan, 2,2-Bis-[4-(ß-hydroxyethoxy)-phenyl]propan, 2-Methyl-propandiol-1,3, 2-Methylpentandiol-1,5, 2,2,4(2,4,4)-Trimethylhexandiol-1,6, Hexantriol-1,2,6, Butan¬triol-1,2,4, Tris-(ß-hydroxyethyl)isocyanurat, Mannit, Sorbit, Polypropylenglykole, Polybutylenglykole, Xylylenglykol oder Hydroxypivalinsäureneopentylglykolester, 2-Methylpropandiol, 2,2-Dimethylpropandiol, Diethylenglykol, Dodecandiol-1,12, 1,4-Cyclohexandimethanol und 1,2- und 1,4-Cyclohexandiol.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert und/oder ungesättigt sein.

Zu den bevorzugten Dicarbonsäuren oder Derivaten zählen Bernstein-, Adipin-, Kork-, Azelain- und Sebacinsäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Geeignete Polyesterpolyole sind auch solche, die sich in bekannter Weise durch Ringöffnung aus Lactonen, wie ,-Caprolacton, und einfachen Diolen als Startermoleküle herstellen lassen.

Die zur Herstellung der Polyesterpolyole verwendeten Diole und Dicarbonsäuren bzw. deren Derivate können in beliebigen Mischungen eingesetzt werden.

Besonders bevorzugt werden Polyester als Binder eingesetzt, deren OH-Zahl zwischen 25 und 400 liegt, deren Säurezahl höchstens 2 mg KOH / g beträgt und deren molare Masse zwischen 1000 und 4000 g/mol liegt. Die OH-Zahl wird analog DIN 53 240-2 bestimmt; die Säurezahl analog DIN EN ISO 2114. Die molare Masse berechnet aus Hydroxyl- und Carboxyl-Endgruppen. Insbesondere werden mehrere solcher Polyester als Binder eingesetzt.

Polyester haben sich als Bindemittel mit besonders guter Metallhaftung hervorgetan (Organic Coatings: Sience and Technology, Z.W.Wicks, Jr.F. Jones, S.P.Pappas, Wiley-Interscience, New York 1999, cap. 24.2.1.2., Seite 459). Zusätzlich ermöglichen Polyester mit den genannten Kennwerten die Einstellung einer Flexibilität, die für den Verwendungszweck und die Verarbeitungsschritte notwendig sind. Diese Eigenschaften der Polyester macht man sich auch bei dem sogenannten Coil Coating und Can Coating zu Nutze; vgl. Ullmann's Encyclopedia of Industrial Chemistry, Vol A 18, p 526-528, VCH Verlag, 1991.

Ganz besonders bevorzugt werden Polycaprolactone als Binder eingesetzt, deren OH-Zahl zwischen 540 und 25, deren Säurezahl zwischen 0,5 und 1 mg KOH / g beträgt und deren molare Masse zwischen 240 und 10000 g/mol liegt. Geeignete Polycaprolactone sind Capa 3022,Capa 3031,Capa 3041,Capa 3050,Capa 3091,Capa 3201,Capa 3301 Capa 4101,Capa 4801 Capa 6100,Capa 6200,Capa 6250, alle von Perstorp, Schweden. Selbstverständlich können auch Mischungen der Polycaprolactone, Polyester und Polyole verwendet werden.

Als Cobindemittel wird eine oxirangruppenhaltige Verbindung verwendet.

Als Cobindemittel kommen prinzipiell alle Epoxydharze in Frage. Zu den Epoxidharzen zählen z. B. Polyepoxide auf Basis von Bisphenol A-diglycidylether, Bisphenol F-diglycidylether oder cycloaliphatische Typen.

Vorzugsweise werden Epoxidharze als Cobindemittel eingesetzt, welche ausgewählt sind aus der Gruppe umfassend Epoxidharze auf Basis von Bisphenol A-diglycidylether, Epoxidharze auf Basis von Bisphenol F-diglycidylether und cycloaliphatische Typen wie z.B. 3,4-Epoxycyclohexyl-epoxyethan oder 3,4-Epoxycyclohexylmethyl-3,4-epoxy-cyclohexancarboxylat wobei Bisphenol A basierte Epoxidharze und Bisphenol F basierte Epoxidharze besonders bevorzugt sind.

Erfindungsgemäß können auch Mischungen von Epoxidharzen als Cobindemittel eingesetzt werden.

Das Epoxyequivalentgewicht (EEW) des Cobindemittels sollte zwischen 182 und 940 g/eq. liegen (Bestimmung gemäß ASTM D 1652). Durch die Berücksichtigung der genannten Epoxyequivalentgewichte erhält man neben einer Verbesserung der Metallhaftung der Matrix eine zusätzliche Vernetzung, ohne dass die Verformungseigenschaften negativ beeinflusst werden. Werden Epoxyverbindungen mit einem größeren EEW als 940 g/eq eingesetzt, erhält man neben einer für die Verarbeitung zu hohen Matrix Viskosität und eine zu starke Versprödung der Matrix, so dass mechanische Beanspruchungen nicht mehr unbeschadet möglich sind.

Herkömmliche reaktive Polyurethanzusammensetzungen weisen Katalysatoren auf, welche die Vernetzungsreaktion beschleunigen. Dies ist im Sinne dieser Erfindung gerade nicht gewünscht, da das Sandwich lagerstabil sein soll und nach Möglichkeit nicht ohne externe Wärmeeinwirkung vernetzt. Deswegen ist das Gemisch vorzugsweise frei ist von Substanzen, welche für die erste und/oder zweite Vernetzungsreaktion katalytisch wirken. "Frei" heißt in diesem Zusammenhang, dass dem Gemisch nicht absichtsvoll Katalysator zugegeben wird. Ein Spurenbestandteil einer katalytisch wirkenden Substanz wird dem Erfindungsgedanken nicht zuwiderlaufen.

Katalytisch wirkende Substanzen sind insbesondere quarternäre Ammoniumsalze, bevorzugt Tetralkylammoniumsalze und/oder quarternäre Phosphoniumsalze mit Halogenen, Hydroxiden, Alkoholaten oder organischen oder anorganischen Säureanionen als Gegenion. Beispiele dafür sind:
Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Tri-methylphenylammoniumhydroxid, Triethylmethylammoniumhydroxid, Tri-methylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri-methylphenylammoniumethanolat, Triethylmethylammoniumethanolat, Tri-methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Tri-methylphenylammoniumbenzylat, Triethylmethylammoniumbenzylat, Tri-methylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid.

Des Weiteren kann das Gemisch in der Polyurethanchemie geläufige Hilfsstoffe oder Additive enthalten, wie zum Beispiel Entlüfter, Entschäumer, Trennmittel, Füllstoffe, Fließhilfsmittel, organische oder anorganische Farbstoffe und Pigmente, Benetzungsmittel und Verlaufshilfsmittel.

Das Gemisch wird aus den vorerörterten Komponenten wie folgt eingewogen:
Härter: 25 bis 45 Gewichts-%
Binder: 10 bis 40 Gewichts-%
Cobinder: 1 bis 15 Gewichts-%
Additive: 0,05 bis 5 Gewichts-%
Lösemittel: 35 bis 50 Gewichts-%

In Summe ergeben sich dann 100 Gewichtsteile.

Bei dem textilen Flächengebilde handelt es sich um ein Gewebe, Gelege, Gewirk, Gestrick oder Vlies aus Kohlefaser, Glasfaser oder Aramidfaser, wie es üblicherweise in Faserverbundwerkstoffen zum Einsatz kommt. Besonders bevorzugt sind Gewebe in Köper-Bindung aus Kohlefaser.

In einer besonders bevorzugten Weiterbildung der Erfindung werden die Schritte a) bis f) des Herstellverfahrens, also bis zum Erhalt des Sandwiches, als kontinuierlicher Rolle-zu-Rolle-Prozess ausgeführt. Rolle-zu-Rolle bedeutet, dass die festen Ausgangsmaterialien als Rollenware vorliegen (Bandstahl/Coils, Textil als Bahnenware von der Rolle) und dass das Zwischenprodukt, nämlich das Sandwich, ebenfalls als Rollenware aufgewickelt wird. Die Laufende Textilbahn wird imprägniert und das Verpressen mit den Blechen erfolgt mit beheizten rotierenden Walzen (Kalandern) oder mit einer Doppelbandpresse. Ein Rolle-zu-Rolle-Prozess ist besonders rationell.

Dank seiner Lagerstabilität und Verformbarkeit kann das Sandwich wieder auf Rolle aufgewickelt werden und zur Weiterverarbeitung gemäß der Schritte g) und h) als Rolle wie ein klassisches Stahl-Coil transportiert werden. Vor der Umformung wird die Sandwichrolle abgewickelt und in Tafelware geschnitten, sodass es sich wie ein klassisches Blech umformen, etwa Tiefziehen lässt. Die Logistik entspricht dann der der klassischen Blechverarbeitung was die Einführung der neuen Technologie signifikant erleichtert. Ein Blechverarbeiter, der ausgehend vom Sandwich die Schritte g) und h) ausführt, wird einfach statt wie bisher mit einem Stahlcoil mit einer teilvernetzten Sandwichrolle beliefert, die er ähnlich wie bisher den Stahl zu einem Faserverbundbauteil umformt. Dies gelingt auch deshalb, weil die zweite Vernetzungsstufe mit einer ohnehin vorhandenen Wärmebehandlung des Stahls zwecks Festigkeitsaufbaus einhergehen kann.

Aufgrund der Trennbarkeit der Arbeitsschritte bis zur Sandwichherstellung und danach zur Weiterverarbeitung zum fertigen Verbundbauteil sieht es eine bevorzugte Weiterbildung der Erfindung vor, dass gemäß Schritt f) erhaltene Sandwich sofort oder erst nach einer Unterbrechung von 1 bis 6 Monaten gemäß Schritt g) zu einem Formkörper umgeformt wird. Diese Zeit wird insbesondere dafür genutzt, das Sandwich zu einem entfernten Umformbetrieb zu transportieren, wo es dann umgeformt wird. Das thermoplastische Matrixmaterial bleibt über so einen langen Zeitraum lagerstabil.

Da das erfindungsgemäße Verfahren idealerweise auf verschiedene Betriebsstätten verteilt ausgeführt wird und diese durchaus zu unterschiedlichen Unternehmen gehören können, wird auch um Schutz für jeden einzelnen Verfahrensschritt nachgesucht, sofern dessen Durchführung einer erfindungsgemäßen Verwirklichung des gesamten Verfahrens dient.

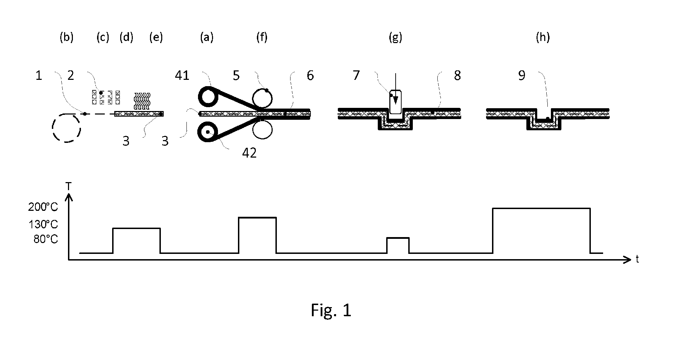

Der prinzipielle Verfahrensablauf soll nun anhand einer schematischen Darstellung erläutert werden. Hierfür zeigt
- Figur 1:: oben einen schematischen Verfahrensablauf nebst zugehörigem, nicht maßstabsgetreuen Temperaturprofil darunter.

Ein textiles Flächengebilde 1 wird als Bahnenware von einer Rolle abgewickelt und so für den Prozess bereitgestellt (Schritt b). Bei dem textilen Flächengebilde handelt es sich beispielsweise um ein Gewebe aus Kohlefasern.

Ferner wird bereitgestellt ein Gemisch 2 enthaltend die reaktiven Komponenten zur Bildung eines Polyurethans (Schritt c). Dies sind im Wesentlichen Härter, Binder und Cobindemittel. Diese Bestandteile sind aufgelöst in einem organischen Lösemittel, sodass das Gemisch 2 als Flüssigkeit vorliegt.

Das flüssige Gemisch 2 wird auf die Bahnenware durch Tränkung, Tauchen oder sonstige für die kontinuierliche Verarbeitung geeignete Verfahren aufgebracht und somit das textile Flächengebilde mit dem Gemisch 2 imprägniert, sodass möglichst alle Fasern von den reaktiven Komponenten umgeben sind (Schritt d).

Nun gilt es, eine erste Vernetzungsreaktion auszulösen, im Zuge derer Härter, Binder und Cobindemittel zu einem an dem textilen Flächengebilde anhaftenden, thermoplastischen Polyurethan umgesetzt werden. Hierzu ist es zunächst erforderlich, die Komponenten in innigen Kontakt miteinander zu bringen. Dafür muss das Lösemittel entfernt werden. Dies geschieht unter mäßiger Wärmeeinwirkung bei etwa 130°C (siehe Temperaturprofil). Durch die Wärme verdampft das Lösemittel und verlässt die das textile Flächengebilde 1. Die auf den Fasern zurückbleibenden reaktiven Komponenten des Gemisches 2 reagieren zu einem thermoplastischen Polymer (Schritt e), welches auf dem textilen Flächengebilde 1 anhaftet und so einen Prepreg 3 bildet.

Die erste Vernetzungsreaktion wurde ausgelöst durch Energieeintrag über die Wärme, die auch zur Verdampfung des Lösemittels verwendet wird. Schritte d und e erfolgen somit während der ersten Wärmeeinwirkung und gehen unmittelbar ineinander über. Die erste Wärmeeinwrikung bei 130°C dauert etwa 20 Minuten.

Nun werden zwei Stahlbleche 41, 42 bereitgestellt, jeweils von einem Coil (Schritt a). Die Bleche sind vorzugeweise aus einem Dualphasen-Stahl oder einem Bake-hardening-Stahl.

Die beiden Stahlbleche 41, 42 und das Prepreg 3 werden nun in einen Kalander bzw. einer Doppelbandpresse 5 geführt. Dabei wird das Prepreg 3 zwischen den beiden Stahlblechen 41, 42 angeordnet. Der Kalander 5 umfasst zwei beheizte Walzen, die zum Verpressen unter Wärmeeinwirkung vorgesehen sind. Ebenso ist die Verwendung einer beheizbaren Doppelbandpresse möglich.

Der Kalander bzw. die Doppelbandpresse 5 verpresst die beiden Stahlbleche 41, 42 und das textile Flächengebilde mit dem daran anhaftenden thermoplastischen Polymer (Prepreg 3) unter Druck für etwa 2 - 10 Minuten bei 130°C bis 160°C Wärmeeinwirkung zu einem Sandwich 6 (Schritt f). Das Sandwich 6 hat die Schichtfolge Stahlblech 41, Prepreg 3, Stahlblech 42.

Die über die Kalanderwalzen bzw. Doppelbandpresse eingetragene Wärme hält den Thermoplasten in einem fließfähigen Zustand, sodass eine gute Anhaftung des Polymers an den Stahl erzielt wird. Wenn das Sandwich 6 den Kalander oder die Doppelbandpresse 5 verlässt, sind so die beiden Stahlbleche 41, 42 über das thermoplatische Polyurethan unter Einschluss des textilen Flächengebildes aneinander gefügt, sodass das Sandwich 6 an einem Stück bequem gehandhabt werden kann, ohne zu delaminieren. Es handelt sich bereits um einen Faserverbundwerkstoff mit thermoplastischer Matrix.

Das Sandwich 6 hat aber noch eine flache Form. Um ihm eine dreidimensionale Gestalt zu geben wird es nun einer Umformung zugeführt, wo eine Tiefziehpresse 7 das Sandwich 6 zu einem dreidimensionalen Formkörper 8 umformt, genauer gesagt tiefzieht (Schritt g).

Die Tiefziehpresse 7 kann ebenfalls beheizt werden , um während des Umformvorgangs ein Fließen des Thermoplasten zu begünstigen. Dies senkt die Presskräfte und das Risiko einer Delaminierung des Sandwiches während des Tiefziehens. Die Temperatur der Tiefziehpresse 7 beträgt etwa 80°C, der Tiefziehvorgang dauert nur etwa eine Minute.

An dieser Stelle sei angemerkt, dass das Umformen des Sandwiches 6 (Schritt g) nicht unmittelbar nach dem Verpressen (Schritt f) stattfinden muss. Vielmehr bietet es sich an, das Sandwich 6 zunächst wie ein Coil aufzurollen und dann zur Tiefziehpresse 7 zu transportieren (nicht in Figur 1 dargestellt). Aufgrund der Lagerstabilität des eingesetzten Polyurethans, welches aus seinem anvernetzten, thermoplastischen Zustand nicht ohne Energieeintrag weitervernetzt, kann das Sandwich 6 problemlos als Coil gelagert und transportiert werden, etwa in einen Pressbetrieb, wo die Tiefziehpresse 7 steht. Dort wird das Sandwichcoil dann abgerollt und in Tafelware geschnitten. Das Sandwich wird dann als Tafel dem Umformvorgang zugeführt. Der Rolle-zu-Rolle-Prozess endet demnach mit dem Aufwickeln des Sandwiches nach Schritt f.

Das die Tiefziehpresse 7 verlassende Formteil 8 hat bereits im Wesentlichen die Geometrie des fertigen Faserverbundbauteils 9. Es lässt sich praktisch auf Maß pressen. Dennoch ist das Formteil 8 noch nicht gebrauchsfertig, da sich seine Matrix noch im thermoplastischen Zustand befindet.

Um die endgültigen mechanischen Eigenschaften einzustellen ist eine zweite Vernetzungsreaktion erforderlich, die den Thermoplasten zu einem duroplastischen Polyurethan weitervernetzt.

Die zweite Vernetzungsreaktion wird wieder durch Wärmeeintrag ausgelöst. Dies geschieht aber nun auf einem höheren Temperaturniveau als zuvor, nämlich bei 200°C und über einen längeren Zeitraum von etwa 30 Minuten. Die Wärmebehandlung des Formkörpers 8 benötigt deswegen eine höhere Temperatur und eine längere Dauer, weil das Endvernetzen des Polyurethans eine größere Energie erfordert als das Anvernetzen. Am Ende der Wärmebehandlung des Formkörpers 8 (Schritt h) steht das fertige Faserverbundbauteil 9, bei dem das Polymer seinen endvernetzten, duroplastischen Zustand erreicht hat und damit dem Faserverbundbauteil 9 seine Endfestigkeit gibt. Da bereits der Formkörper 8 die gewünschte Gestalt hatte und diese sich im Zuge der Wärmebehandlung kaum mehr ändert, ist ein weitere Gestaltänderung des Faserverbundbauteils 9 nicht mehr erforderlich, abgesehen von kleinen Nacharbeiten.

Die Wärmebehandlung, die zur Durchführung der zweiten Vernetzungsreaktion vorgenommen wird (Schritt h), kann im Übrigen auch dafür genutzt werden, die Festigkeit des Stahls des Formkörpers 8 zu erhöhen: Die Wärmebehandlung des Stahls zwecks Festigkeitsaufbaus und die Endvernetzung des Polymers zum Duroplasten erfolgen dann in einem Arbeitsschritt, um so Zeit und Energie zu sparen. Um diesen Vorteil zu nutzen, muss ein bake-hardening-Stahl ein oder Dualphasen-Stahl verwendet werden.

### Beispiele

In allen Versuchen wurde als textile Flächengebilde das folgende Kohlenstofffasergewebe verwendet: 200 g/m²- Köper Gewebe, Torayca FT 300 3K 200tex.

In allen Versuchen wurden galvanisierte, kaltgewalzte Stahlbleche mit einer Blechstärke von 0,2 mm eingesetzt. Es handelte sich dabei um Standart-Bleche von der ThyssenKrupp Steel Europe AG ohne Dualphasen- oder bake-hardening-Gefüge.

In dem nicht erfindungsgemäßen Vergleichsbeispiel 0 wurde als Gemisch eine reaktive Polyurethanzusammensetzung gewählt, die gemäß Beispiel 2 der DE102011006163A1 hergestellt wurde. Die Rezeptur ist in Tabelle 0 dargestellt.

Für die erfindungsgemäßen Beispiele 1 und 2 wurden Gemische mit Rezepturen gemäß der Tabellen 1 und 2 eingesetzt.

**Tabelle 0: Rezeptur des Gemisches zu Vergleichsbeispiel 0**

| Vergleichsbeispiel 0 (nicht erfindungsgemäß) | | | |
|---|---|---|---|
| Härter (60%-ig) (NCO-effektiv: 7,7%) | Uretdiongruppenhaltiger Härter | 65,3 Gew.-% | Evonik Industies |
| Polyol 4640 (OHZ 630 mg KOH/g Molmasse 360 g/Mol flüssig | Binder | 10,9 Gew.-% | Perstorp |
| Benzoin | Entgasungsmittel | 0,2 Gew.-% | Aldrich |
| Butylacetat | Lösemittel | 23,6 Gew.-% | Fluka |

**Tabelle 1: Rezeptur des Gemisches zu erfindungsgemäßen Beispiel 1**

| Beispiel 1 (erfindungsgemäß) | | | |
|---|---|---|---|
| Härter BL 1320 (NCO: 14 %) | Uretdiongruppenhaltiger Härter | Gew.-% 32,9 | Evonik Industies |
| Capa 4101 (OHZ 224 mg KOH/g Molmasse 1000 g/Mol, flüssig | Binder (Polyol) | Gew.-% 20,3 | Perstorp |
| Epoxyharz E | Oxirangruppenhaltiges Cobindemittel | Gew.-% 4,4 | Momentive |
| Methylisobutylketon/ Isopropylacetat | Lösemittel | Gew.-% 42,4 | Fluka |

**Tabelle 2: Rezeptur des Gemisches zu erfindungsgemäßen Beispiel 2**

| Beispiel 2 (erfindungsgemäß) | | | |
|---|---|---|---|
| Härter BL 1320 (NCO: 14 %) | Uretdiongruppenhaltiger Härter | Gew.-% 34,0 | Evonik Industies |
| Capa 4101 (OHZ 224 mg KOH/g Molmasse 1000 g/Mol, flüssig | Binder (Polyol) | Gew.-% 24,7 | Perstorp |
| Epoxyharz D | Oxirangruppenhaltiges Cobindemittel | Gew.-% 6,5 | Momentive |
| Methylisobutylketon/ Isopropylacetat | Lösemittel | Gew.-% 34,8 | Fluka |

Die Einsatzstoffe aus den Tabellen wurden jeweils mittels Dissolver zu einer homogenen Lösung verarbeitet.

Zur Belegung des textilen Flächengebildes mit dem Gemisch (Herstellung der Prepregs) wurde das Kohlenstofffasergewebe mit der Lösung der Matrixmaterialien imprägniert und dann in einem Ofen bei 140°C für 10 Minuten getrocknet. (Verfahrensschritte d und e)

Anschließend wurden die Prepregs zwischen zwei Blechlagen gebracht und mit einer Laborpresse LaboPress P 400 S der Firma Vogt bei Temperaturen zwischen 120°und 170°C jeweils zu einem Sandwich gefügt. Der Druck wurde zwischen Normaldruck und 20 bar variiert. Zusätzlich können Rahmen als Abstandshalter benutzt werden. Die Verweilzeiten wurden zwischen 3 Minuten und 20 Minuten variiert. (Verfahrensschritt f)

In dem Vergleichsbeispiel 0 und den erfindungsgemäßen Beispielen 1 und 2 wurde die Temperatur der Presse auf 170°C eingestellt. Der Druck während der Verweilzeit von 3 Minuten wurde auf 10 bar geregelt, zusätzlich wurden Rahmen verwendet.

Direkt nach Entnahme der Sandwiche aus der Presse und Abkühlung auf Raumtemperatur erfolgte die Umformung mittels eines Erichsen Tiefungsgerätes (ERICHSEN Tiefungsprobe nach DIN EN ISO 1520) Modell 202. (Verfahrensschritt g)

Die zu den Formkörpern umgeformten Sandwiche wurden dann bei Temperaturen zwischen 180° und 200°C in einer Zeit von 60 Minuten in einem Ofen zu einem jeweiligen Faserverbundbauteil ausgehärtet. (Verfahrensschritt h)

Für Haftungsuntersuchungen wurden flächige Prüfkörper ohne den Umformschritt g (Erichsen Tiefung) nach dem beschriebenen Verfahrensschritten d, e, f und h hergestellt. Dazu wurden Streifen von 40mm Breite nach dem Pressvorgang aus dem Sandwich mittels einer Blechschere geschnitten und auf einer Universal Zugprüfmaschine der Firma Zwick geprüft. Die Prüfung erfolgte nach ASTM D 1876 als T-Peel Test an 40 mm breiten Prüfkörpern.

Bei der Umformung (Verfahrensschritt g) der Sandwichs des Vergleichsbeispiel 0 trennten sich die Deckbleche komplett von dem Kohlenstofffasergewebe und konnten nicht weiterverarbeitet werden.

Eine Ablösung der Deckbleche wurde ebenfalls bei dem Zuschneiden der flächigen Prüfkörper festgestellt, die Haftungsprüfung konnte deswegen nicht durchgeführt werden.

Die Versuchsergebnisse sind in Tabelle 3 zusammengefasst.

**Tabelle 3: Versuchsergebnisse**

| | Erichsen Tiefung (mm) | T-Peel Test Fmittel (N/40 mm) |
|---|---|---|
| Beispiel 0 | Sandwich zerstört | - |
| Beispiel 1 | 6 mm, Haftung ok | 123 |
| Beispiel 2 | 6 mm, Haftung ok | 144 |

Der Vergleich der Versuchsergebnisse zeigt, dass sich nur mit einer erfindungsgemäßen Zusammensetzung des Gemisches Sandwiche herstellen lassen, dessen Zusammenhalt bei der Umformung zu dem Formkörper nicht zerstört wird. Die Haftung des thermoplastischen Polyurethans aus erfindungsgemäßer Gemischrezeptur an den Stahlblechen ist also ausreichend, um das Sandwich beim Umformen verbunden zu halten. Der so erhaltene Formkörper lässt sich anschließend durch Wärmebehandlung zu einem Faserverbundbauteil aushärten. Dabei wird das thermoplastische Polyurethan zu einem duroplastischen Material weitervernetzt.

### Bezugszeichenliste

- 1: textiles Flächengebilde
- 2: Gemisch
- 3: Prepreg
- 41: erstes Stahlblech
- 42: zweites Stahlblech
- 5: Kalander bzw. Doppelbandpresse
- 6: Sandwich
- 7: Tiefziehpresse
- 8: Formkörper
- 9: Faserverbundbauteil

## Patentansprüche

1. Verfahren zur Herstellung eines Faserverbundbauteils mit den folgenden Schritten:
a) Bereitstellen mindestens zweier Stahlbleche;
b) Bereitstellen mindestens eines textilen Flächengebildes;
c) Bereitstellen eines wasserfreien Gemisches enthaltend
• mindestens einen Härter, bei welchem es sich um ein Uretdion handelt, dessen NCO-Funktionalität mindestens zwei beträgt,
• mindestens einen Binder, der Hydroxylgruppen aufweist und dessen OH-Funktionalität drei bis sechs beträgt,
• und mindestens ein Cobindemittel, welches Oxirangruppen aufweist;
d) Belegen des textilen Flächengebildes mit dem Gemisch;
e) Beaufschlagen des mit dem Gemisch belegten Flächengebildes mit Energie zwecks Durchführung einer ersten Vernetzungsreaktion, im Zuge derer Härter, Binder und Cobindemittel zu einem an dem textilen Flächengebilde anhaftenden, thermoplastischen Polymer umgesetzt werden;
f) Verpressen der Stahlbleche und des textilen Flächengebildes mit dem daran anhaftenden thermoplastischen Polymer unter Wärmeeinwirkung zu einem Sandwich, dergestalt, dass das thermoplastische Polymer unter Einschluss des textilen Flächengebildes die Stahlbleche aneinander fügt;
g) Umformen des Sandwichs zu einem Formkörper;
h) Wärmebehandeln des Formkörpers unter Erhalt des Faserverbundbauteils, wobei das thermoplastische Polymer in einer zweiten Vernetzungsreaktion zu einem duroplastischen Polymer umgesetzt wird.

2. Verfahren nach Anspruch 1
**dadurch gekennzeichnet, dass** das Gemisch als trockenes Pulvergemisch eingesetzt und auf das textile Flächengebilde aufgestreut wird.

3. Verfahren nach Anspruch 1,
**dadurch gekennzeichnet, dass** das Gemisch als Lösung in mindestens einem organischen Lösemittel, insbesondere ausgewählt aus der Gruppe umfassend Ester und Ketone, eingesetzt wird, dass das textile Flächengebilde mit der Lösung imprägniert wird, und dass das Lösemittel anschließend durch Verdampfung aus dem textilen Flächengebilde wieder entfernt wird.

4. Verfahren nach Anspruch 3,
**dadurch gekennzeichnet, dass** das Verdampfen des Lösemittels und das Beaufschlagen des Gemisches mit Energie zwecks Durchführung der ersten Vernetzungsreaktion in einem Arbeitsschritt durch Wärmeeinwirkung bei einer Temperatur von 80°C bis 160°C erfolgen, bevorzugt bei einer Temperatur von 120°C bis 160°C, besonders bevorzugt bei einer Temperatur von 140°C bis 160°C, wobei die Wärmeeinwirkung über einen Zeitraum von insbesondere 10 Minuten bis 30 Minuten erfolgt.

5. Verfahren nach einem der vorhergehenden Ansprüche,
**dadurch gekennzeichnet, dass** die Wärmeeinwirkung beim Verpressen der Stahlbleche und des textilen Flächengebildes mit dem daran anhaftenden thermoplastischen Polymer zu dem Sandwich bei einer Temperatur von 80°C bis 180°C erfolgt, bevorzugt bei einer Temperatur von 100°C bis 170°C, besonders bevorzugt bei einer Temperatur von 120°C bis 160°C, wobei die Wärmeeinwirkung über einen Zeitraum von insbesondere 3 Minuten bis 20 Minuten erfolgt.

6. Verfahren nach einem der vorhergehenden Ansprüche,
**dadurch gekennzeichnet, dass** das Umformen des Sandwiches zu dem Formkörper bei einer Temperatur von 20°C bis 160°C erfolgt, bevorzugt bei einer Temperatur von 20°C bis 100°C.

7. Verfahren nach einem der vorhergehenden Ansprüche,
**dadurch gekennzeichnet, dass** die Wärmebehandlung des Formkörpers zwecks Durchführung der zweiten Vernetzungsreaktion bei einer Temperatur von 170° bis 210°C, bevorzugt von 180° bis 200°C erfolgt, insbesondere, dass sie bei einer Temperatur erfolgt, die mindestens 20°C höher liegt als die Temperatur, bei der die erste Vernetzungsreaktion durchgeführt wird, wobei die Wärmebehandlung über einen Zeitraum von insbesondere 20 Minuten bis 60 Minuten erfolgt.

8. Verfahren nach einem der vorhergehenden Ansprüche,
**dadurch gekennzeichnet, dass** Bleche aus einem Stahl eingesetzt werden, die bei der Wärmebehandlung des Formkörpers eine Veränderung und/oder Umlagerung ihres Gefüges erfahren, mit welcher insbesondere eine Erhöhung der Festigkeit des Stahls einhergeht.

9. Verfahren nach einem der vorhergehenden Ansprüche,
**dadurch gekennzeichnet, dass** Stahlbleche eingesetzt werden, die mit einer Korrosionsschutzschicht versehen sind, insbesondere, dass verzinkte Stahlbleche eingesetzt werden.

10. Verfahren nach einem der vorhergehenden Ansprüche,
**dadurch gekennzeichnet, dass** als Härter blockierungsmittelfreie Uretdione eingesetzt werden, welche hergestellt sind aus mindestens einer der folgenden Substanzen: Isophorondiisocyanat (IPDI), Hexamethylendiisocyanat (HDI), Diisocyanatodicyclohexylmethan (H12MDI), 2-Methylpentandiisocyanat (MPDI), Gemisch aus 2,2,4-Trimethylhexamethylendiisocyanat und 2,4,4- Trimethylhexamethylendiisocyanat (TMDI), Norbornandiisocyanat (NBDI), wobei besonders bevorzugt blockierungsmittelfreie Uretdione eingesetzt werden, die aus IPDI,HDI,TMDI und/oder H12MDI hergestellt sind.

11. Verfahren nach einem der vorhergehenden Ansprüche,
**dadurch gekennzeichnet, dass** mindestens eine Polyolverbindung als Binder eingesetzt wird.

12. Verfahren nach einem der vorhergehenden Ansprüche,
**dadurch gekennzeichnet, dass** mindestens ein Polyester als Binder eingesetzt wird, dessen OH-Zahl zwischen 25 und 400 liegt, dessen Säurezahl höchstens 2 mg KOH / g beträgt und dessen molare Masse zwischen 1000 und 4000 g/mol liegt, insbesondere, dass mehrere Polyester gemäß dieser Spezifikation als Binder eingesetzt werden.

13. Verfahren nach einem der vorhergehenden Ansprüche,
**dadurch gekennzeichnet, dass** besonders bevorzugt mindestens ein Polycaprolacton als Binder eingesetzt wird, dessen OH-Zahl zwischen 540 und 25, dessen Säurezahl zwischen 0,5 und 1 mg KOH / g beträgt und dessen molare Masse zwischen 240 und 1000 g/mol liegt, insbesondere, dass mehrere Polycaprolactone gemäß dieser Spezifikation allein oder - besonders bevorzugt - in Kombination mit Polyestern gemäß der in Anspruch 12 genannter Spezifikation als Binder eingesetzt werden.

14. Verfahren nach einem der vorhergehenden Ansprüche,
**dadurch gekennzeichnet, dass** mindestens eine oxirangruppenhaltige Verbindung als Cobindemittel eingesetzt wird, dessen Epoxyequivalentgewicht (EEW) zwischen 182 und 940 g/eq. liegt, insbesondere, dass mehrere solcher Verbindungen als Cobindemittel eingesetzt werden.

15. Verfahren nach einem der vorhergehenden Ansprüche,
**dadurch gekennzeichnet, dass** als Cobindemittel Epoxidharze eingesetzt werden, welche ausgewählt sind aus der Gruppe umfassend Epoxidharze auf Basis von Bisphenol A-diglycidylether, Epoxidharze auf Basis von Bisphenol F-diglycidylether und cycloaliphatische Typen wie beispielsweise 3,4-Epoxycyclohexyl-epoxyethan oder 3,4-Epoxycyclohexylmethyl-3,4-epoxy-cyclohexancarboxylat, wobei Bisphenol A basierte Epoxidharze und Bisphenol F basierte Epoxidharze besonders bevorzugt sind.

16. Verfahren nach einem der vorhergehenden Ansprüche,
**dadurch gekennzeichnet, dass** das Gemisch frei ist von Substanzen, welche für die erste und/oder zweite Vernetzungsreaktion katalytisch wirken.

17. Verfahren nach einem der vorhergehenden Ansprüche,
**dadurch gekennzeichnet, dass** es sich bei dem textilen Flächengebilde um ein Gewebe, Gelege, Gewirk, Gestrick oder Vlies aus Kohlefaser, Glasfaser oder Aramidfaser handelt.

18. Verfahren nach einem der vorhergehenden Ansprüche,
**dadurch gekennzeichnet, dass** seine Schritte a) bis f), also bis zum Erhalt des Sandwiches, als kontinuierlicher Rolle-zu-Rolle-Prozess ausgeführt werden.

19. Verfahren nach einem der vorhergehenden Ansprüche,
**dadurch gekennzeichnet, dass** gemäß Schritt f) erhaltene Sandwich unmittelbar oder erst nach einer Unterbrechung von 1 bis 6 Monaten gemäß Schritt g) zu einem Formkörper umgeformt wird, insbesondere, dass das Sandwich während dieser Unterbrechung zu einem entfernten Umformbetrieb transportiert wird.

20. Schritt eines Verfahrens nach einem der vorhergehenden Ansprüche, durchgeführt zum Zwecke einer Durchführung des gesamten Verfahrens.
